# EUROPÄISCHE PATENTSCHRIFT

(11) **EP 2 746 095 B1**
(45) Veröffentlichungstag und Bekanntmachung des Hinweises auf die Patenterteilung: **27.03.2019**
(21) Anmeldenummer: 13197129.3
(22) Anmeldetag: 13.12.2013
(51) Int. Cl.: B60N 2/06, B60N 2/14, F16C 33/38, B60N 2/16, B60N 2/24, F16C 19/10, F16C 33/58

(54) **Nutzfahrzeugsitz mit drehbarem Sitzteil**
Commercial vehicle seat with rotatable seat part
Siège de véhicule utilitaire doté d'une partie d'assise rotative

(30) Priorität: 18.12.2012 DE 102012112523
(43) Veröffentlichungstag der Anmeldung: 25.06.2014
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A1- 0 515 275
- DE-T2- 60 118 068
- DE-T2- 69 202 551
- JP-A- 2003 063 288
- US-A- 4 971 392
- US-A1- 2008 211 284
- US-B1- 6 447 065

## Beschreibung

Die Erfindung betrifft einen Nutzfahrzeugsitz mit einem jeweils unterhalb eines Sitzteils angebrachten Sitzunterbau-Trageteil und Sitzunterbau-Basisteil, wobei das Sitzunterbau-Trageteil gegenüber dem Sitzunterbau-Basisteil verschiebbar und/oder höhenverstellbar ist, gemäß dem Oberbegriff des Patentanspruches 1.

Nutzfahrzeugsitze, insbesondere für Traktoren und Baumaschinenfahrzeuge, weisen häufig das Problem auf, dass sie lediglich in Fahrtrichtung ausgerichtet sind und somit es für den Fahrzeugsitzbenutzer schwierig ist, sich umzudrehen, um beispielsweise den rückwärtigen Bereich des Traktors, an dem sich im Einsatz befindende Feldbearbeitungsgeräte befestigt sind, zu beobachten. Zudem ist es unkomfortabel, derartige in Fahrtrichtung ausgerichtete Nutzfahrzeugsitze von der Seite aus, an der eine Kabinenzugangstür angeordnet ist, zu belegen oder wieder zu verlassen.

Die Druckschrift DE 692 02 551 T2 zeigt beispielsweise einen Sitz, welcher ein Oberteil und ein dazu mittels einer Schienenanordnung verschiebbares Unterteil aufweist. Eine Drehvorrichtung ermöglicht eine Drehung des Sitzes gegenüber dem Sitzunterbau und sieht zwei Kugellagerkäfige aus zwei Reihen von Kugellagern und entsprechenden Lagerschalen vor. Ein bandartiger Käfig, welcher eine definierte radiale Beabstandung ermöglicht, ist jedoch nicht vorgesehen.

Aus der US 6 447 065 B1 ist ein Sitz bekannt, welcher ein Oberteil und ein dazu höhenverstellbares Unterteil aufweist. Zwischen einer ersten Drehplatte und einer zweiten Drehplatte des Oberteils ist ein Kugellager mit innerhalb einer Kugelbahn laufenden Kugeln angeordnet. Der Abstand zwischen den miteinander verschraubten Drehplatten und damit der Druck auf die Kugeln können mittels einer Kombination aus schräg laufenden Kontaktflächen und einer drehbaren Einstellplatte verstellt werden. Ein horizontal ausgerichteter Käfig hält die Kugeln dabei radial auf Abstand.

Demzufolge ist es Aufgabe der Erfindung, einen Nutzfahrzeugsitz zur Verfügung zu stellen, der einen erhöhten Komfort beim Beobachten des rückwärtigen Bereiches eines Nutzfahrzeuges und beim Einsteigen und Verlassen des Nutzfahrzeuges durch den Fahrer zur Verfügung stellt. Ferner sollen in den Sitz eingeleitete Kräfte definiert aufgenommen werden können.

Diese Aufgabe wird gemäß den Merkmalen des Patentanspruches 1 gelöst.

Ein wesentlicher Punkt der Erfindung liegt darin, dass bei einem Nutzfahrzeugsitz mit einem jeweils unterhalb eines Sitzteils angebrachten Sitzunterbau-Trageteil, welches gegenüber einem Sitzunterteil-Basisteil verschiebbar und/oder höhenverstellbar ist, das Sitzunterbau-Trageteil ein mit der Unterseite des Sitzteils verbundenes Trageoberteil und ein mit dem Basisteil verbundenes Trageunterteil aufweist, wobei zwischen dem Trageoberteil und dem Trageunterteil mindestens ein Wälzlager mit einem Wälzlagerringkäfig, der sich kreisförmig um eine in Fahrzeugsitzhöhenrichtung verlaufende fiktive Drehachse erstreckt, angeordnet ist, um das Trageoberteil gegenüber dem Trageunterteil drehbar zu lagern. Ein derartig ausgestatteter Nutzfahrzeugsitz mit einem Wälzlager ermöglicht das Drehen des Sitzteiles gegenüber dem Sitzunterbau-Basisteil und dem Trageunterteil um die in Fahrzeugsitzhöhenrichtung verlaufende fiktive Drehachse, sodass bei Einsteigen und Verlassen des Fahrzeuges, insbesondere bei Belegen und Verlassen des Nutzfahrzeugsitzes, eine handbetätigte oder elektrische, auch automatisch funktionierende, Drehung des Nutzfahrzeugsitzes stattfindet, und zwar in Richtung der üblicherweise seitlich angeordneten Nutzfahrzeugkabinentür. Erfindungsgemäß ist das Wälzlager ein Kugellager, welches einen im Wesentlichen bandartig ausgebildeten Kugellagerringkäfig und Kugeln aufweist, wobei die Kugeln durch erste Abschnitte des Kugellagerringkäfigs gehalten sind, wobei eine Breitenrichtung des Kugellagerringkäfigs sich in einem Winkel aus einem Bereich von 10° bis 80° zur Richtung der Drehachse erstreckt, wobei jede Kugel durch die ersten Abschnitte, die in ihrer Ausdehnung in Richtung zu den vorder- und rückseitigen Randbereichen einer jeden Kugel zunehmen, links- und rechtsseitig gestützt wird, wobei die ersten Abschnitte zwischen den Kugeln in durchgehende zweite Abschnitte übergehen und weiter wobei die Kugeln die zweiten Abschnitte des Kugellagerringkäfigs voneinander beabstandet sind, also in Vorwärts- und Rückwärtsrichtung entlang einer Kreisrichtung des Kugellagerringkäfigs mit Hilfe der zweiten Abschnitte voneinander beabstandet sind, und wobei, jede Kugel durch diese ersten Abschnitte und die zweiten Abschnitte zumindest in Teilen ihrer Kugelmantelfläche verstärkt umgeben ist, um so eine zuverlässige Arretierung der einzelnen Kugeln innerhalb des Kugellagerringkäfigs zu gewährleisten, und weiter wobei jede Kugel die zweiten Abschnitte vorder- und rückseitig - bezogen auf die Kreisbahnrichtung - in Nachbarschaft aufweist, wobei diese zweiten Abschnitte ober- und unterseitig mittels Verlängerungen der zweiten Abschnitte die Kugel mit einer größeren Fläche umfassen, um so zumindest in Auf- und Abwärtsrichtung die Kugeln zuverlässig innerhalb des Kugellagerringkäfigs zu erhalten.

Ebenso kann der Nutzfahrzeugsitz vorteilhaft um einen Winkel von 1° bis maximal 180°, vorzugsweise um einen Winkel von 1° bis 60° um die fiktive Achse gedreht werden, um den rückwärtigen Bereich eines Traktors, an dem feldbearbeitende Geräte befestigt sind, während der Feldbearbeitung besser zu beobachten. Hierdurch muss der Fahrer nicht die gesamte Drehung mit seinem Körper ausführen und kann zugleich seinen Rücken an der Rückenlehne des Nutzfahrzeuges weiterhin abstützen, während er den rückwärtigen Bereich des Nutzfahrzeuges beobachtet.

Das Feldlager ist erfindungsgemäß ein Kugellager mit einem Kugellagerringkäfig, wobei der Kugellagerringkäfig im Wesentlichen bandartig ausgebildet ist. Der bandartig ausgebildete Kugellagerringkäfig erstreckt sich hierbei in Breitenrichtung in einem Winkel aus einem Bereich von 10° bis 80° zur Richtung der Drehachse. Dies bedeutet, dass sich hieraus für den bandartig ausgebildeten Kugellagerringkäfig in seiner Gesamtheit die Form eines Segmentes einer Kegelmantelfläche ergibt, also ein bandartiges Segment der Kegelmantelfläche darstellt. Hierdurch kann der bandartige Kugellagerringkäfig nicht nur Kräfte in Fahrzeughöhenrichtung aufnehmen, sondern auch in Fahrzeuglängs- und -breitenrichtung.

Sofern die zwischen dem Trageoberteil und Trageunterteil wirkenden Drehbewegungskräfte und auch weiteren Kräfte der Fahrzeugslängs- und -breitenrichtung einerseits und in Fahrzeughöhenrichtung andererseits gleich groß oder annähernd gleich groß sind, ist die Ausrichtung des bandartigen Kugellagerringkäfigs idealerweise in einem Winkel von 55° bezüglich seiner Breitenrichtung zu der Richtung der Drehachse gegeben.

Der kreisförmige, bandartige Kugellagerringkäfig liegt vorzugsweise an jeder Kugel, von der kreisförmig innerhalb eines geschlossen Kreises beispielsweise 10 bis 300 Kugeln angeordnet sein können, in Kreisverlaufsrichtung vorder- und rückseitig an, sodass die einzelnen Kugeln in deren Drehrichtung, also in Kreisverlaufsrichtung, durch den Kugellagerringkäfig gestützt werden und in ihrer Position bezüglich des Kugellagerringkäfigs verbleiben.

Um eine gute Positionierung des Kugellagerringkäfigs zusammen mit den Kugeln, also des Kugellagers insgesamt, zwischen dem Trageoberteil und dem Trageunterteil zu ermöglichen, insbesondere da das Kugellager derart ausgebildet ist, dass der Kugellagerringkäfig in seiner Breitenrichtungserstreckung in einem Winkel bezüglich der Drehachse ausgerichtet ist, ist dieses Kugellager vorteilhaft unterseitig in einer im Trageunterteil zentriert ausgebildeten tellerförmigen Ausnehmung als Negativform angeordnet und oberseitig an einer an der Unterseite des Trageoberteils zentriert ausgebildeten tellerförmigen Positivform anliegend.

Gemäß einer Ausführungsform kann das Kugellager oberseitig an der Unterseite des Trageunterteils und unterseitig an einer mit dem Trageoberteil verbundenen schalenförmigen Negativform, die unterhalb des Trageunterteils angeordnet ist, gelagert sein.

Ebenso kann gemäß einer weiteren Ausführungsform die Anordnung von zwei kreisförmigen Kugellagern mit unterschiedlichen Durchmessern zwischen dem Trageoberteil und dem Trageunterteil vorgesehen sein, wobei eines dieser Kugellager oberhalb des Trageunterteils und das weitere unterhalb dieses Trageunterteils angeordnet ist und beide Kugellager an dem zu dem Trageoberteil zugehörigen Teilen anliegend beziehungsweise darin gelagert sind.

Vorzugsweise weist ein derartiger Nutzfahrzeugsitz eine Arretierungseinrichtung auf, die zum Arretieren des Trageoberteils gegen Drehbewegungen gegenüber dem Trageunterteil angeordnet ist. Beispielsweise kann diese Arretierungseinrichtung mit dem Trageoberteil verbunden sein und in das Trageunterteil bei Betätigung eingreifen, oder vice versa kann die Arretierungseinrichtung im Trageunterteil befestigt sein und in das Trageoberteil eingreifen.

Die Arretierungseinrichtung weist ein vorzugsweise handbetätigbares, aber auch automatisch und/oder elektrisch betätigbares, federbeaufschlagtes, verschiebbares Stiftelement auf, welches beispielsweise am Trageoberteil befestigt ist, wobei das Stiftelement in eine zu einem Stiftelementende komplementär ausgebildete Ausnehmung im Trageunterteil eingreifbar ist.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1a und 1b: einen erfindungsgemäßen Nutzfahrzeugsitz, der in Fahrtrichtung ausgerichtet und in einer gedrehten Position dargestellt ist;
- Fig. 2: in einer perspektivischen Darstellung ein Sitzunterbau-Trageteil des erfindungsgemäßen Nutzfahrzeugsitzes;
- Fig. 3: das in Fig. 2 gezeigte Sitzunterbau-Trageteil mit den einzelnen Bauteilen in Explosionsdarstellung;
- Fig. 4: in einer perspektivischen Darstellung das Kugellager des erfindungsgemäßen Nutzfahrzeugsitzes, so wie es bei Einbau in den Nutzfahrzeugsitz vorliegt;
- Fig. 5: in einer Draufsicht das Kugellager des erfindungsgemäßen Nutzfahrzeugsitzes;
- Fig. 5a: eine Schnittdarstellung entlang A-·-A wie in Fig. 5 dargestellt;
- Fig. 5b: eine Schnittdarstellung entlang B-·-B wie in Fig. 5 dargestellt;
- Fig. 5c: eine Schnittdarstellung entlang dem Schnitt C-·-C wie in Fig. 5 dargestellt;
- Fig. 5d: eine Schnittdarstellung entlang dem Schnitt D-·-D wie in Fig. 5 dargestellt;
- Fig. 6a und 6b: das Kugellager in Draufsicht und in einer perspektivischen Darstellung für den erfindungsgemäßen Nutzfahrzeugsitz;
- Fig. 6c: eine Detailansicht J, wie in Fig. 6b dargestellt;
- Fig. 6d: eine Schnittdarstellung des Kugellagers entlang des Schnitts K-·-K, wie in Fig. 6c dargestellt;
- Fig. 6e: eine Detailansicht L des Kugellagers, wie in Fig. 6d dargestellt;
- Fig. 7: in einer seitlichen Schnittdarstellung ein Sitzunterbau-Trageteil des erfindungsgemäßen Nutzfahrzeugsitzes gemäß einer zweiten Ausführungsform der Erfindung;
- Fig. 7a: eine Detailansicht H des Sitzunterbau-Trageteiles wie in Fig. 7 dargestellt;
- Fig. 8: in einer seitlichen Schnittdarstellung ein Sitzunterbau-Trageteil für den erfindungsgemäßen Nutzfahrzeugsitz gemäß einer dritten Ausführungsform der Erfindung;
- Fig. 8a: eine Detailansicht E des Sitzunterbau-Trageteils, wie in Fig. 8 dargestellt.

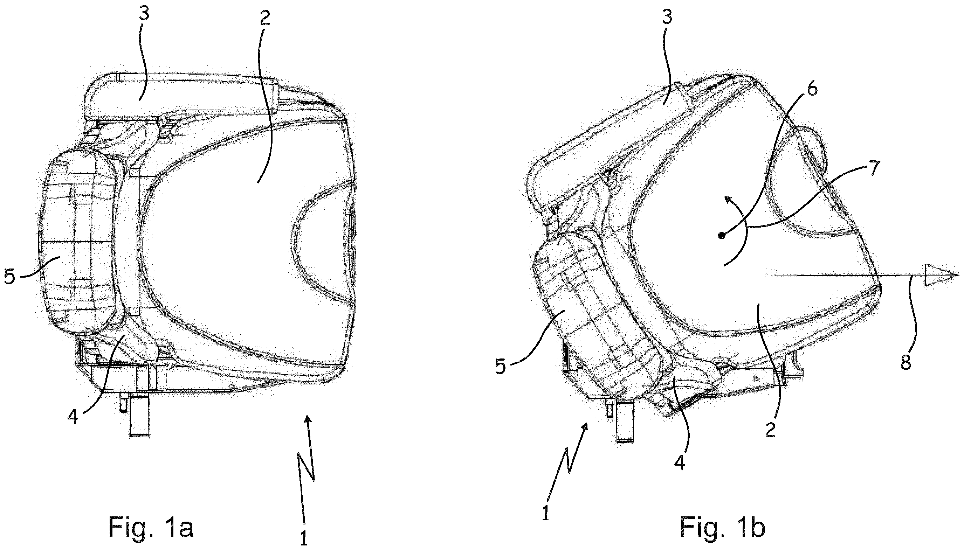

In Fig. 1a und 1b ist der erfindungsgemäße Nutzfahrzeugsitz 1 sowohl in nichtgedrehter als auch in gedrehter Position dargestellt. Der Nutzfahrzeugsitz 1 umfasst ein Sitzteil 2, eine Armlehne 3 und eine Rückenlehne 4, wobei optional eine Kopfstütze 5 angeordnet sein kann.

Der Nutzfahrzeugsitz 1 kann um eine fiktive Drehachse 6 entlang des Pfeiles 7 in einer Horizontalebene gegenüber einer Vorwärtsfahrtrichtung 8 gedreht werden, wobei der Begriff Horizontalebene derart zu verstehen ist, dass diese Ebene sich in Fahrzeugbreitenrichtung und in Fahrzeuglängsrichtung erstreckt und nur dann horizontal ausgerichtet ist, wenn das Fahrzeug sich auf horizontal ausgerichtetem Untergrund befindet. Andernfalls neigt sich diese Ebene mit Neigung des gesamten Fahrzeuges entsprechend Fahrzeugbreiten- und Fahrzeuglängsrichtung.

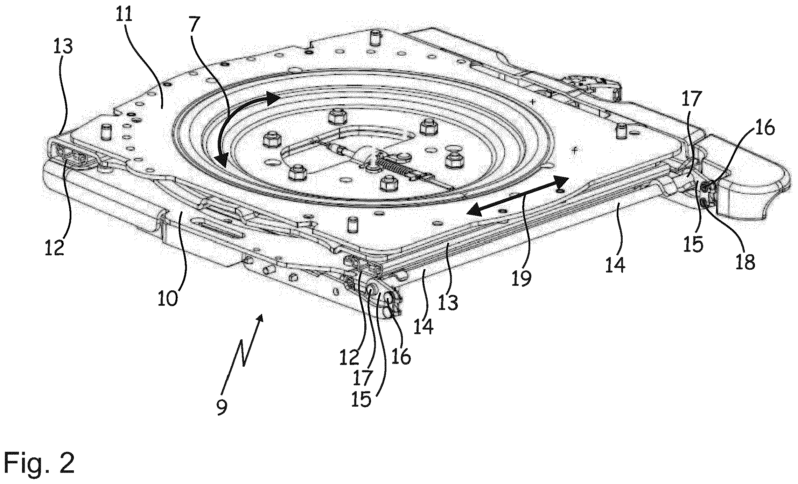

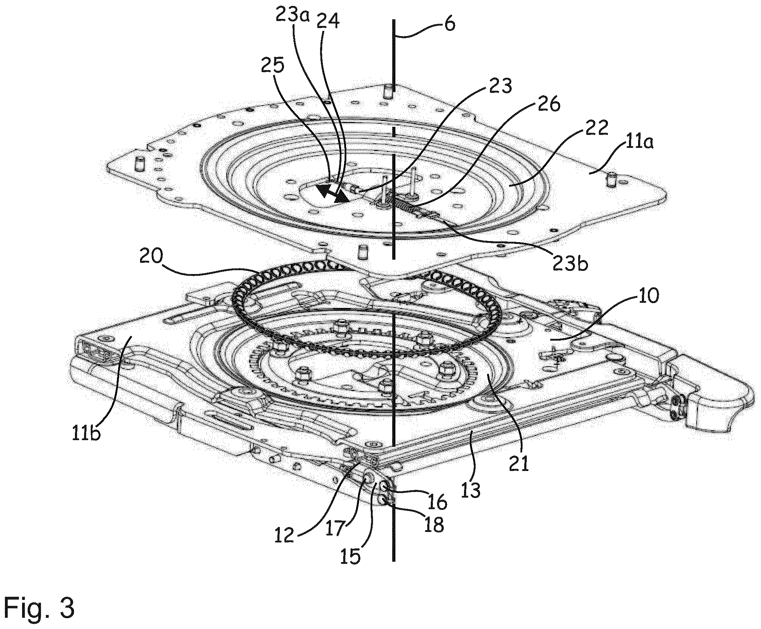

In Fig. 2 ist in einer perspektivischen Darstellung ein Sitzunterbau-Basisteil 10 und ein Sitzunterbau-Trageteil 11 im zusammengebauten Zustand und in Fig. 3 in einer Explosionsdarstellung in einzelnen Teilen widergegeben. Wie diesen beiden Figuren entnommen werden kann, weist der Sitzunterbau 9, der unterhalb des Sitzteiles 2 angeordnet ist, ein Sitzunterbau-Basisteil 10, welches beispielsweise mit der Karosserie des Fahrzeuges verbunden sein kann, und ein Sitzunterbau-Trageteil 11, welches mit dem Sitzunterbau-Basisteil 10 oberseitig verbunden ist, auf.

Das Sitzunterbau-Trageteil 11 ist gegenüber dem Sitzunterbau-Basisteil 10 mittels Schienenelementen 12, 13 verschiebbar angeordnet. Erste Schienenteile 13, welche sich vorder- und rückseitig oder links- und rechtsseitig an der Unterseite des Sitzunterbau-Trageteils 11 befinden, wirkgleiten mit den zweiten Schienenteilen 12, welche sich an der Oberseite des Sitzunterbau-Basisteils 10 befinden, zusammen. Damit ist ein Verschieben des Sitzunterbau-Trageteiles 11 gegenüber des Sitzunterbau-Basisteils 10 in Pfeilrichtung 19 möglich.

Zudem kann das Sitzunterteil-Basisteil 10 in sich mittels eines Gestänges 14 und stirnseitig daran angebrachten Hebeln 15, die mittels Gelenkverbindungen 16, 17 und 18 schwenkbar gelagert sind, in Höhenrichtung geschwenkt oder sogar insgesamt höhenverstellt werden.

Das Sitzunterbau-Trageteil 11 setzt sich aus einem Trageoberteil 11a und einem Trageunterteil 11b zusammen, die beide überwiegend flächenhaft ausgebildet sind und zueinander drehbar um eine Achse 6 gelagert sind. Die Drehbewegung ergibt sich aus dem Pfeil 7 gemäß Fig. 2.

Um eine derartige Drehbewegung zu ermöglichen, ist in dem Trageoberteil 11a und im Trageunterteil 11b ein Kugellager 20 angeordnet. Dieses Kugellager 20 ist innerhalb einer tellerförmigen Ausnehmung 21 an der Oberseite des Trageunterteils 11b gelagert, wobei die tellerförmige Ausnehmung 21 als Negativform dient. Eine entsprechend komplementär ausgebildete Positivform 22 ist an der Unterseite des Trageoberteiles 11a ausgebildet und liegt an dem Kugellager 20 oberseitig an. Hierdurch ist eine Drehung des Trageoberteils 11a gegenüber dem Trageunterteil 11b um die Achse 6 bei Bewegung des Kugellagers 20 beziehungsweise dessen Kugeln, möglich.

Das Trageoberteil 11a liegt somit unterseitig auf dem Kugellager 20 auf.

Zusätzlich ist an dem Trageoberteil 11a eine Arretierungseinrichtung 23, 25, 26 angeordnet, die im Wesentlichen aus einem sich quer zu der Drehachse 6 erstreckenden Stiftelement 23 besteht, welches entlang des Pfeiles 24 verschoben werden kann. Ein Stiftelementende 23a kann in eine Ausnehmung 25, die in eine weitere hier nicht näher dargestellte Ausnehmung des Trageunterteils 11b übergeht, eingreifen, sodass eine Arretierung des Trageoberteils 11a gegenüber dem Trageunterteil 11b hinsichtlich einer Drehbewegung möglich ist.

Das Stiftelement 23 ist vorzugsweise federbeaufschlagt mittels eines Federelementes 26, sodass bei Anziehen des Stiftelementes 23 an seinem weiteren Ende 23b, beispielsweise mittels eines Handgriffs oder eines elektrischen Antriebes, das Stiftelement 23 entgegen einer Federkraft des Federelementes 26 aus der Ausnehmung 25 herausgezogen wird und somit auch eine Arretierung gegenüber dem Trageunterteil 11b löst. Sobald ein hier nicht näher dargestellter Handgriff, der mit dem weiteren Ende 23b des Stiftelementes 23 verbunden, wieder losgelassen wird, wird aufgrund der Kraftwirkung des Federelementes 26 das Stiftelement 23 wieder in das Trageunterteil 11b eingreifen und bei einer entsprechenden Ausrichtung des Trageoberteils 11a gegenüber dem Trageunterteil 11b in seiner Drehrichtung eine Arretierung ermöglichen.

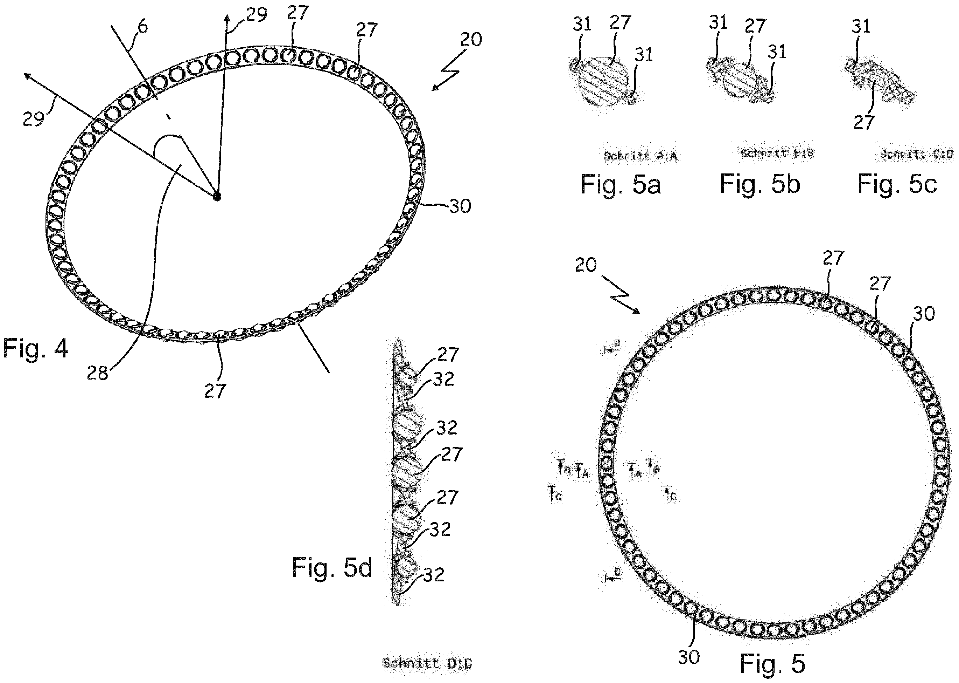

In Fig. 4 ist in einer perspektivischen Darstellung das Kugellager 20 im eingebauten Zustand widergegeben. Dieser Darstellung ist zu entnehmen, dass das Kugellager 20 einen Kugellagerringkäfig 30 aufweist, der bandartig ausgebildet ist. Hierbei ist das Band derart ausgerichtet, dass es mit einem Winkel 28 gegenüber der Drehachse 6 in seiner Breitenrichtung 29 schräg beziehungsweise angewinkelt gestellt ist. Somit bildet der kreisförmige, bandartige Kugellagerringkäfig 30 ein Segment einer Kegelmantelfläche, welches bandförmig ist, wobei der gedachte Kegel eine oberhalb des Kugellagerringkäfigs 30 angeordnete, gedachte Basisfläche aufweist.

In Fig. 5 ist in einer Draufsicht das Kugellager 20 für den erfindungsgemäßen Nutzfahrzeugsitz 1 dargestellt. Dieses Kugellager 20 weist einzelne Kugeln 27 auf, die gemäß Fig. 5a, welche eine Schnittdarstellung entlang des Schnittes A-·-A, wie in Fig. 5 gezeigt, dargestellt, links- und rechtsseitig durch erste Abschnitte 31 des bandartigen Kugellagerringkäfigs 30 gehalten werden.

In Fig. 5b ist eine Schnittdarstellung entlang des Schnittes B-·-B, wie in Fig. 5 gezeigt, wiedergegeben. Dieser Darstellung ist zu entnehmen, dass jede Kugel 27 durch die ersten Abschnitte 31, die in ihrer Ausdehnung in Richtung zu den vorder- und rückseitigen Randbereichen einer jeden Kugel 27 zunehmen, links- und rechtsseitig gestützt wird.

In Fig. 5c ist in einer Schnittdarstellung entlang des Schnittes C-·-C, wie in Fig. 5 dargestellt, nochmals der erste Abschnitt 31 des Kugellagerringkäfigs 30, wie er einer Kugel 27 zugeordnet ist, in einem noch weiter außen liegenden vorder- und rückseitigen Randbereich der Kugel 27 widergegeben. Dieser Darstellung ist zu entnehmen, dass der erste Abschnitt 31 zwischen den Kugeln 27 durchgehende zweite Abschnitte 32 übergehen, wie sie im Übrigen in Fig. 5d, die eine Schnittdarstellung entlang des Schnittes D-·-D, wie in Fig. 5 gezeigt widergibt, ebenso dargestellt werden.

Der in Fig. 5d widergegebenen Schnittdarstellung ist zu entnehmen, dass Kugeln 27 mit den zweiten Abschnitten 32 des Kugellagerringkäfigs 30 voneinander beabstandet sind, also in Vorwärts- und Rückwärtsrichtung entlang der Kreisrichtung des Kugellagerringkäfigs 30 mit Hilfe der Abschnitte 32 voneinander beabstandet sind. Vorteilhaft ist jede Kugel 27 durch diese ersten Abschnitte 31 und zweiten Abschnitte 32 zumindest in Teilen ihrer Kugelmantelfläche verstärkt umgeben, um so eine zuverlässige Arretierung der einzelnen Kugeln 27 innerhalb des Kugellagerringkäfigs 30 zu gewährleisten.

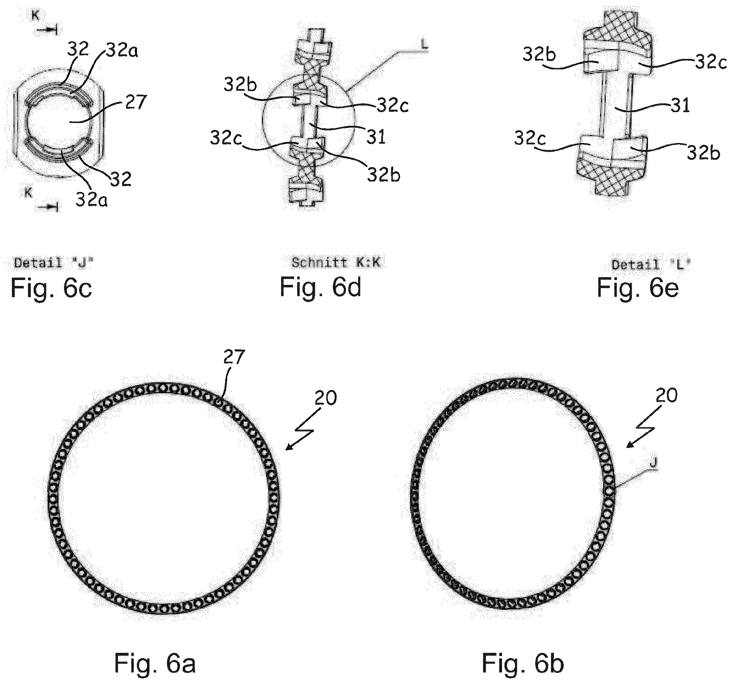

In Fig. 6a und 6b ist nochmal das Kugellager 20 des erfindungsgemäßen Nutzfahrzeugsitzes 1 in einer Draufsicht und in einer perspektivischen Darstellung widergegeben. In Fig. 6c ist die Detailansicht J, wie in Fig. 6b angedeutet, vergrößert dargestellt. Dieser Darstellung ist zu entnehmen, dass jede Kugel 27 die zweiten Abschnitte 32 vorder- und rückseitig - bezogen auf die Kreisbahnrichtung - in Nachbarschaft aufweist, wobei diese zweiten Abschnitte 32 ober- und unterseitig mittels Verlängerungen 32a der Abschnitte 32 die Kugel 27 mit einer größeren Fläche umfassen, um so zumindest in Auf- und Abwärtsrichtung die Kugel 27 zuverlässig innerhalb des Kugellagerringkäfigs 30 zu erhalten.

In Fig. 6d ist in einer Schnittdarstellung entlang des Schnittes K-·-K, wie in Fig. 6c gezeigt, ein Ausschnitt des Kugellagerringkäfigs 30 widergegeben. In Fig. 6e ist eine vergrößerte Darstellung der in Fig. 6d widergegeben Schnittdarstellung gezeigt. In beiden Figuren wird verdeutlicht, dass jede Kugel 27 zum einen, einen ersten Abschnitt 31, der ebenso auf der anderen Seite der Kugel 27, wie hier nicht gezeigt, angeordnet sein kann, und die zweiten Abschnitte 32, die die einzelnen Elemente 32b und 32c aufweisen, gehalten wird. Die Elemente 32b sind zu der Kugellager 20 hingewandte hervorstehende Elemente der zweiten Abschnitte 32 und diagonal zueinander angeordnet. Die Elemente 32c hingegen sind leicht zurückgesetzt bezüglich der Richtung zu dem Kugelmittelpunkt einer Kugel 27, sodass ein Abrollen der Kugel 27 innerhalb des Kugellagerringkäfigs 30 bevorzugt auf den Elementen 32b stattfindet.

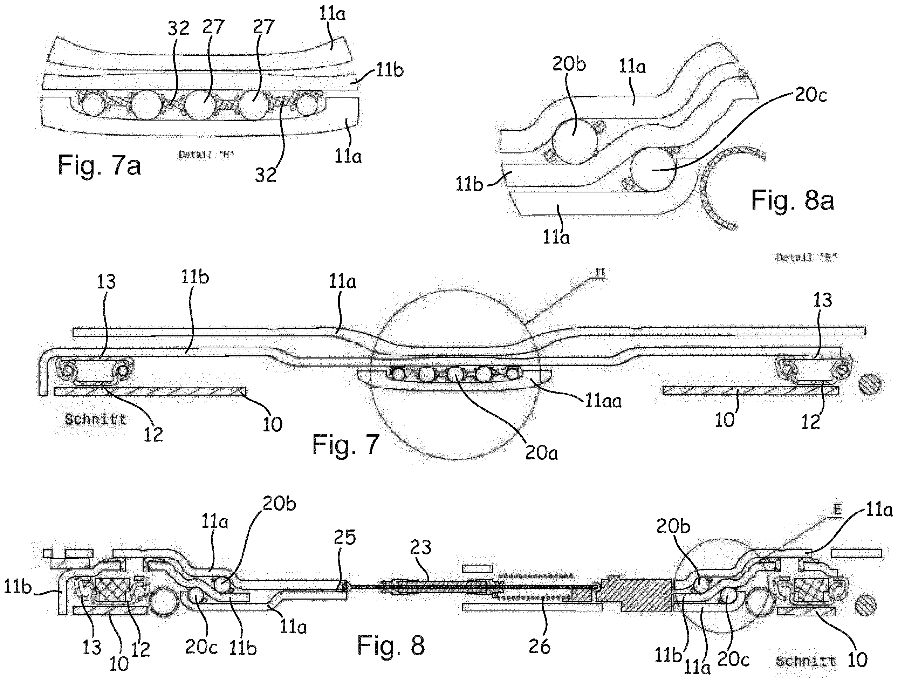

In Fig. 7 ist in einer seitlichen Schnittdarstellung ein Sitzunterbau-Trageteil für einen Fahrzeugsitz gemäß einer zweiten Ausführungsform der Erfindung gezeigt. Gleich und gleich bedeutende Teile sind mit den gleichen Bezugszeichen versehen.

Wie in Fig. 7 und in Fig. 7a, die eine Detailansicht H, wie in Fig. 7 dargestellt, widergibt, zu sehen ist, ist in diesem Fall ein Kugellager 20a unterhalb des Trageunterteils 11b angeordnet. Das Kugellager 20a ist somit sowohl an der Unterseite des Trageunterteils 11b als auch an der Oberseite eines schaligen Bauteiles 11aa des Trageoberteils 11a gelagert. Hierbei muss das schalenförmige Bauteil 11aa mit dem Trageoberteil 11a verbunden werden, wie es hier nicht näher dargestellt ist. Zusätzlich sind wiederum die Schienenelemente 12 und 13 zum gleitenden Bewegen des Sitzunterbau-Trageteils 11a, 11b und 11aa gegenüber den Sitzunterbau-Basisteil 10 angeordnet.

Jede der Kugeln 27 ist wieder mit zweiten Abschnitten 32 des Kugellagerringkäfigs 30 von einander beabstandet.

In Fig. 8 und in Fig. 8a, welche eine Detailansicht E, wie in Fig. 8 gezeigt, widergibt, ist in einer seitlichen Schnittdarstellung ein Sitzunterbau-Trageteil für einen Nutzfahrzeugsitz gemäß einer dritten Ausführungsform der Erfindung gezeigt. Gleiche und gleich bedeutende Bauteile sind mit den gleichen Bezugszeichen versehen.

In diesem Fall sind insgesamt zwei Kugellager 20b und 20c mit unterschiedlichen Durchmessern zwischen dem Trageoberteil 11a und dem Trageunterteil 11b angeordnet. Das Trageunterteil 11b ist in Fahrzeughöhenrichtung betrachtet zwischen zwei Anteilen des Trageoberteils 11a angeordnet und jeweils durch die Kugellager 20b und 20c gegenüber dem Trageoberteil drehbar gelagert. Wiederum ist eine Arretierungseinrichtung 23, 25 und 26 vorgesehen.

Eine derartige Konstruktion gemäß Fig. 8 weist eine zuverlässige Drehlagerung auch hinsichtlich eines unbeabsichtigten Koppelns des Trageoberteils von dem Trageunterteil in Fahrzeughöhenrichtung auf, da das Trageunterteil 11b von dem Trageoberteil 11a beidseitig, also ober- und unterseitig, mittels der Kugellager 20b und 20c umfasst wird beziehungsweise gegenüber diesem Trageoberteil ober- und unterseitig drehbar gelagert ist.

### Bezugszeichenliste

- 1: Nutzfahrzeugsitz
- 2: Sitzteil
- 3: Armlehne
- 4: Rückenlehne
- 5: Kopfstütze
- 6: Drehachse
- 7: Kreisverlaufsrichtung
- 8: Fahrtrichtung
- 9: Sitzunterbau
- 10: Sitzunterbau-Basisteil
- 11: Sitzunterbau-Trageteil
- 11a: Trageoberteil
- 11aa: Negativform
- 11b: Trageunterteil
- 12: Schienenelement
- 13: Schienenelement
- 14: Gestänge
- 15: Hebel
- 16: Gelenkverbindung
- 17: Gelenkverbindung
- 18: Gelenkverbindung
- 19: Pfeilrichtung
- 20: Kugellager
- 20a, 20b, 20c: Kugellager
- 21: tellerförmige Ausnehmung
- 22: Positivform
- 23: Stiftelement, Arretierungseinrichtung
- 23a, 23b: Stiftelementende
- 24: Pfeil
- 25: Ausnehmung, Arretierungseinrichtung
- 26: Federelement, Arretierungseinrichtung
- 27: Kugel
- 28: Winkel
- 29: Breitenrichtung
- 30: Kugellagerringkäfig
- 31: erste Abschnitte
- 32: zweite Abschnitte
- 32a: Verlängerungen
- 32b, 32c: Elemente

## Patentansprüche

1. Nutzfahrzeugsitz (1) mit einem jeweils unterhalb eines Sitzteiles (2) angebrachten Sitzunterbau-Trageteil (11) und Sitzunterbau-Basisteil (10), wobei das Sitzunterbau-Trageteil (11) gegenüber dem Sitzunterbau-Basisteil (10) verschiebbar und/oder höhenverstellbar ist, wobei das Sitzunterbau-Trageteil (11) ein mit der Unterseite des Sitzteiles (2) verbundenes Trageoberteil (11a) und ein mit dem Basisteil (10) verbundenes Trageunterteil (11b) aufweist, wobei zwischen dem Trageoberteil (11a) und dem Trageunterteil (11b) mindestens ein Wälzlager (20) mit einem Wälzlagerring (30), der sich kreisförmig um eine in Fahrzeugsitzhöhenrichtung verlaufende fiktive Drehachse (6) erstreckt, angeordnet ist, um das Trageoberteil (11a) gegenüber dem Trageunterteil (11b) drehbar (7) zu lagern, wobei das Wälzlager ein Kugellager (20, 20a, 20b, 20c) ist, welches einen im Wesentlichen bandartig ausgebildeten Kugellagerringkäfig (30) und Kugeln (27) aufweist, wobei die Kugeln (27) durch erste Abschnitte (31) des Kugellagerringkäfigs (30) gehalten sind,
**dadurch gekennzeichnet, dass**
eine Breitenrichtung (29) des Kugellagerringkäfigs (30) sich in einem Winkel (28) aus einem Bereich von 10° bis 80° zur Richtung der Drehachse (6) erstreckt, wobei jede Kugel (27) durch die ersten Abschnitte (31), die in ihrer Ausdehnung in Richtung zu den vorder- und rückseitigen Randbereichen einer jeden Kugel (27) zunehmen, links- und rechtsseitig gestützt wird, wobei die ersten Abschnitte (31) zwischen den Kugeln in durchgehende zweite Abschnitte (32) übergehen und weiter wobei die Kugeln (27) die zweiten Abschnitte (32) des Kugellagerringkäfigs (30) voneinander beabstandet sind, also in Vorwärts- und Rückwärtsrichtung entlang einer Kreisrichtung des Kugellagerringkäfigs (30) mit Hilfe der zweiten Abschnitte (32) voneinander beabstandet sind, und wobei,
jede Kugel durch diese ersten Abschnitte (31) und die zweiten Abschnitte (32) zumindest in Teilen ihrer Kugelmantelfläche verstärkt umgeben ist, um so eine zuverlässige Arretierung der einzelnen Kugeln (27) innerhalb des Kugellagerringkäfigs (30) zu gewährleisten, und weiter wobei
jede Kugel (27) die zweiten Abschnitte (32) vorder- und rückseitig - bezogen auf die Kreisbahnrichtung - in Nachbarschaft aufweist, wobei diese zweiten Abschnitte (32) ober- und unterseitig mittels Verlängerungen (32a) der zweiten Abschnitte (32) die Kugel (27) mit einer größeren Fläche umfassen, um so zumindest in Auf- und Abwärtsrichtung die Kugeln (27) zuverlässig innerhalb des Kugellagerringkäfigs (30) zu erhalten.

2. Nutzfahrzeugsitz (1) nach Anspruch 1,
**dadurch gekennzeichnet, dass**
der bandartig ausgebildete Kugellagerringkäfig (30) in seiner Gesamtheit die Form eines Segmentes einer Kegelmantelfläche aufweist.

3. Nutzfahrzeugsitz (1) nach einem der Ansprüche 1 oder 2,
**dadurch gekennzeichnet, dass**
der kreisförmige, bandartige Kugellagerringkäfig (30, 32) an jeder Kugel (27) in Kreisverlaufsrichtung (7) vorder- und rückseitig anliegt.

4. Nutzfahrzeugsitz (1) nach einem der Ansprüche 1-3,
**dadurch gekennzeichne**t, dass
das Kugellager (20) unterseitig in einer im Trageunterteil (11b) zentriert ausgebildeten tellerförmigen Ausnehmung (21) als Negativform angeordnet ist und oberseitig an einer an der Unterseite des Trageoberteils (11a) zentriert ausgebildeten tellerförmigen Positivform (22) anliegt.

5. Nutzfahrzeugsitz (1) nach einem der Ansprüche 1-4,
**dadurch gekennzeichnet, dass**
das Kugellager (20a, 20c) oberseitig an der Unterseite des Trageunterteils (11b) und unterseitig in einer mit dem Trageoberteil (11a) verbundenen schalenförmigen Negativform (11aa) gelagert ist.

6. Nutzfahrzeugsitz (1) nach einem der Ansprüche 1-5,
**dadurch gekennzeichnet, dass**
zwei kreisförmige Kugellager (20b, 20c) mit unterschiedlichen Durchmessern zwischen Trageoberteil (11a) und Trageunterteil (11b) angeordnet sind.

7. Nutzfahrzeugsitz (1) nach einem der vorrangegangenen Ansprüche,
**dadurch gekennzeichnet, dass**
das gegenüber dem Trageunterteil (11b) drehbar gelagerte Trageoberteil (11a) eine Arretierungseinrichtung (23, 25, 26) zum Arretieren des Trageoberteils (11a) gegen Drehbewegungen (7) gegenüber dem Trageunterteil (11b) aufweist.

8. Nutzfahrzeugsitz (1) nach Anspruch 7,
**dadurch gekennzeichnet, dass**
die Arretierungseinrichtung ein handbetätigbares, federbeaufschlagtes verschiebbares Stiftelement (23), welches am Trageoberteil (11a) befestigt ist, aufweist, wobei das Stiftelement (23) in eine zu einem Stiftelementende (23a) komplementär ausgebildete Ausnehmung (25) im Trageunterteil (11b) eingreifbar ist.

## Claims

1. Commercial vehicle seat (1) comprising a seat substructure support part (11) and a seat substructure base part (10), each attached underneath a seat part (2), the seat substructure support part (11) being movable and/or height-adjustable with respect to the seat substructure base part (10), the seat substructure support part (11) comprising a support top part (11a), connected to the underside of the seat part (2), and a support bottom part (11b), connected to the base part (10), at least one rolling bearing (20), having a rolling-bearing ring (30) that extends in a circular manner about an imaginary rotational axis (6) extending in a vehicle seat height direction, being arranged between the support top part (11a) and the support bottom part (11b), in order to mount the support top part (11a) so as to be rotatable (7) with respect to the support bottom part (11b), the rolling bearing being a ball bearing (20, 20a, 20b, 20c) which comprises a substantially strip-like ball race cage (30) and balls (27), the balls (27) being held by first portions (31) of the ball race cage (30),
**characterised in that**
a width direction (29) of the ball race cage (30) extends at an angle (28) from a range of from 10° to 80° with respect to the direction of the rotational axis (6), each ball (27) being supported on the left-hand side and right-hand side by the first portions (31), of which the dimension increases towards the front and rear edge portions of each ball (27), the first portions (31) transitioning between the balls into continuous second portions (32), and the balls (27) also being spaced apart from one another by means of the second portions (32) of the ball race cage (30), i.e. are spaced apart from one another in the forward and backward direction, in a circular direction of the ball race cage (30), by means of the second portions (32), and
each ball being increasingly enclosed by these first portions (31) and the second portions (32), at least in parts of the ball lateral surface thereof, in order to ensure reliable locking of the individual balls (27) within the ball race cage (30), and
each ball (27) also being adjacent to the second portions (32) at the front and back, based on the direction of the circular path, these second portions (32) enclosing the ball (27) at the top and bottom, using a larger area, by means of extensions (32a) of the second portions (32) in order to reliably keep the balls (27) inside the ball race cage (30), at least in the upward and downward direction.

2. Commercial vehicle seat (1) according to claim 1,
**characterised in that**
the entirety of the strip-like ball race cage (30) is in the form of a segment of the lateral surface of a cone.

3. Commercial vehicle seat (1) according to either claim 1 or claim 2,
**characterised in that**
the circular, strip-like ball race cage (30, 32) abuts each ball (27) at the front and back in the circle extension direction (7).

4. Commercial vehicle seat (1) according to any of claims 1-3,
**characterised in that**
at the bottom, the ball bearing (20) is arranged in a disc-shaped recess (21), in the form of a negative mould, which is centred in the support bottom part (11b), and, at the top, abuts a disc-shaped positive mould (22), which is centred on the underside of the support top part (11a).

5. Commercial vehicle seat (1) according to any of claims 1-4,
**characterised in that**
the ball bearing (20a, 20c) is supported at the top on the underside of the support bottom part (11b) and at the bottom in a bowl-shaped negative mould (11aa) connected to the support top part (11a).

6. Commercial vehicle seat (1) according to any of claims 1-5,
**characterised in that**
two circular ball bearings (20b, 20c) having different diameters are arranged between the support top part (11a) and the support bottom part (11b).

7. Commercial vehicle seat (1) according to any of the preceding claims,
**characterised in that**
the support top part (11a), which is arranged so as to be rotatable with respect to the support bottom part (11b), comprises a locking means (23, 25, 26) for locking the support top part (11a) against rotational movements (7) with respect to the support bottom part (11b).

8. Commercial vehicle seat (1) according to claim 7,
**characterised in that**
the locking means comprises a manually actuatable, spring loaded, displaceable pin element (23), which is fastened to the support top part (11a), it being possible for the pin element (23) to engage in a recess (25) in the support bottom part (11b) which is formed so as to be complementary to a pin-element end (23a).

## Revendications

1. Siège de véhicule utilitaire (1) comportant une partie support (11) de sous-structure de siège et une partie base (10) de sous-structure de siège, chacune montée au-dessous d'une partie siège (2), la partie support (11) de sous-structure de siège étant déplaçable et/ou réglable en hauteur par rapport à la partie base (10) de sous-structure de siège, la partie support (11) de sous-structure de siège présentant une partie support supérieure (11a) reliée au côté inférieur de la partie siège (2) et une partie support inférieure (11b) reliée à la partie base (10), où entre la partie support supérieure (11a) et la partie support inférieure (11b) est disposé au moins un palier de roulement (20) comportant une bague de palier de roulement (30) qui s'étend de façon circulaire autour d'un axe de rotation fictif (6) s'étendant dans la direction de la hauteur du siège de véhicule, pour supporter en rotation (7) la partie support supérieure (11a) par rapport à la partie support inférieure (11b), le palier de roulement étant un roulement à billes (20, 20a, 20b, 20c), lequel présente une cage de bague de roulement à billes (30) réalisée sensiblement sous forme de ruban et des billes (27), les billes (27) étant supportées par des premières parties (31) de la cage de bague de roulement à billes (30),
**caractérisé par le fait que**
une direction de la largeur (29) de la cage de bague de roulement à billes (30) s'étend à un angle (28) se situant dans une plage de 10° à 80° par rapport à la direction de l'axe de rotation (6), chaque bille (27) étant supportée côté gauche et côté droit par les premières parties (31), qui augmentent dans leur extension en direction des régions de bordure côté avant et côté arrière d'une bille respective (27), les premières parties (31) passant entre les billes dans des secondes parties continues (32) et en outre les billes (27) étant espacées les unes des autres par les secondes parties (32) de la cage de bague de roulement à billes (30), par conséquent étant espacées les unes des autres à l'aide des secondes parties (32) dans la direction vers l'avant et la direction vers l'arrière le long d'une direction circulaire de la cage de bague de roulement à billes (30), et,
chaque bille étant entourée davantage, au moins dans des parties de sa surface d'enveloppe sphérique par ces premières parties (31) et les secondes parties (32), pour garantir ainsi un arrêt sûr des billes individuelles (27) à l'intérieur de la cage de bague de roulement à billes (30), et en outre
chaque bille (27) présentant les secondes parties (32) côté avant et côté arrière - par rapport à la direction de piste circulaire - à proximité, ces secondes parties (32) entourant les billes (27) côté supérieur et côté inférieur avec une surface plus grande au moyen d'extensions (32a) des secondes parties (32), pour maintenir ainsi au moins dans la direction vers le haut et dans la direction vers le bas les billes (27) de façon sûre à l'intérieur de la cage de bague de roulement à billes (30).

2. Siège de véhicule utilitaire (1) selon la revendication 1,
**caractérisé par le fait que**
la cage de bague de roulement à billes réalisée sous forme de ruban (30) présente dans son ensemble la forme d'un segment d'une surface d'enveloppe conique.

3. Siège de véhicule utilitaire (1) selon l'une des revendications 1 ou 2,
**caractérisé par le fait que**
la cage de bague de roulement à billes sous forme de ruban, circulaire (30, 32) repose côté avant et côté arrière sur chaque bille (27) dans la direction de déplacement circulaire (7).

4. Siège de véhicule utilitaire (1) selon l'une des revendications 1-3,
**caractérisé par le fait que**
le roulement à billes (20) est disposé côté inférieur dans un renfoncement (21) en forme de disque formé centralement en tant que moule négatif dans la partie support inférieure (11b) et repose côté supérieur sur un moule positif (22) en forme de disque formé centralement sur le côté inférieur de la partie support supérieure (11a).

5. Siège de véhicule utilitaire (1) selon l'une des revendications 1-4,
**caractérisé par le fait que**
le roulement à billes (20a, 20c) est monté côté supérieur sur le côté inférieur de la partie support inférieure (11b) et côté inférieur dans un moule négatif (11aa) en forme de coque relié à la partie support supérieure (11a).

6. Siège de véhicule utilitaire (1) selon l'une des revendications 1-5,
**caractérisé par le fait que**
deux roulements à billes circulaires (20b, 20c) avec des diamètres différents sont disposés entre la partie support supérieure (11a) et la partie support inférieure (11b).

7. Siège de véhicule utilitaire (1) selon l'une des revendications précédentes,
**caractérisé par le fait que**
la partie support supérieure (11a) montée apte à tourner par rapport à la partie support inférieure (11b) présente un dispositif d'arrêt (23, 25, 26) pour l'arrêt de la partie support supérieure (11a) à l'encontre de mouvements de rotation (7) par rapport à la partie support inférieure (11b).

8. Siège de véhicule utilitaire (1) selon la revendication 7,
**caractérisé par le fait que**
le dispositif d'arrêt présente un élément de broche (23) déplaçable, sollicité par ressort, apte à être actionné manuellement, lequel est fixé à la partie support supérieure (11a), l'élément de broche (23) étant apte à venir en prise dans un renfoncement (25) formé de façon complémentaire à une extrémité d'élément de broche (23a) dans la partie support inférieure(11b).
